# EUROPEAN PATENT APPLICATION

(11) **EP 4 700 888 A1**
(43) Date of publication of application: **25.02.2026**
(21) Application number: 25191298.6
(22) Date of filing: 23.07.2025
(51) Int. Cl.: H01M 10/0562, H01M 4/58, H01M 4/38, H01M 4/36

(54) **COMPOSITE ANODE LAYER, MANUFACTURING METHOD THEREOF, ANODE, AND ALL-SOLID STATE BATTERY**

(30) Priority: 14.08.2024 KR 20240108999
(71) Applicant: SK On Co., Ltd., Seoul 03161 (KR)
(72) Inventor: YOON, Ji Young, 34124 Daejeon (KR); LEE, Jae Woo, 34124 Daejeon (KR)
(74) Representative: Prüfer & Partner mbB Patentanwälte · Rechtsanwälte

(57) **Abstract**

Composite anode layers, anodes, all-solid state batteries, and their manufacturing methods are disclosed. In an embodiment, a composite anode layer includes an anode active material and a sulfide-based solid electrolyte. The anode active material includes a core-shell structured anode active material including a core that includes silicon and a shell disposed on a surface of the core. The shell includes a lithium-containing compound, and the lithium-containing compound comprises at least one of phosphorus and boron. This configuration can improve the structural stability and lithium ion conductivity of an anode active material using a silicon-based anode material.

## Description

### TECHNICAL FIELD

The disclosure and implementations disclosed in this patent document generally relate to a composite anode layer, a method of manufacturing the same, an anode, and an all-solid state battery.

### BACKGROUND

Silicon-based anode materials are considered promising for achieving high capacity and high energy density in lithium secondary batteries due to the high theoretical capacity of silicon (Li22Si5: 4008 mAh/g, Li13Si4: 3579 mAh/g). Accordingly, research and development efforts have been underway to apply silicon-based anode materials to next-generation lithium secondary batteries and all-solid state batteries..

### SUMMARY

The disclosed technology may be implemented in some embodiments to provide an anode active material having improved structural stability of a silicon-based anode material.

In another aspect of the disclosed technology, lithium ion conductivity of an anode active material based on a silicon-based anode material may be improved.

In another aspect of the disclosed technology, an anode having improved chemical stability with a sulfide-based solid electrolyte may be provided.

In another aspect of the disclosed technology, the electrochemical performance of an all-solid state battery based on a sulfide-based solid electrolyte may be improved.

The composite anode layer, the manufacturing method thereof, the anode, and the all-solid state battery implemented based on some embodiments of the disclosed technology may be widely applied to devices within green technology fields such as electric vehicles, battery charging stations, and other solar power generation and wind power generation using batteries. In addition, the composite anode layer, the manufacturing method thereof, the anode, and the all-solid state battery of the disclosed technology may be used in eco-friendly electric vehicles, hybrid vehicles, etc. to ameliorate the effects of climate change by suppressing air pollution and greenhouse gas emissions.

In some embodiments of the disclosed technology, a composite anode layer includes an anode active material and a sulfide-based solid electrolyte, wherein the anode active material includes a core-shell structured anode active material including a core that includes silicon and a shell disposed on a surface of the core. In one example, the shell includes a lithium-containing compound, and the lithium-containing compound includes at least one of phosphorus (P) or boron (B).

The lithium-containing compound may be represented by the following Chemical formula 1.

[Chemical formula 1] LiₐX_{b}O_{c}Y_{d}

In Chemical Formula 1, 0<a≤5, 0<b≤9, 0<c<10, 0≤d≤10, X includes at least one of phosphorus (P) or boron (B), and Y includes at least one of nitrogen (N), aluminum (Al), titanium (Ti), zirconium (Zr), hydrogen (H), vanadium (V), silicon (Si), silicon carbide (SiC), or carbon (C).

In an embodiment, the lithium-containing compound may include at least one of Li₃PO₄, Li₃BO₃, LiPON, or LiBON.

In an embodiment, the lithium-containing compound may include at least one of Li₃PO₄ or LiPON.

In an embodiment, the anode active material may be present in an amount of 20 to 80 wt% based on the total weight of the composite anode layer. In an embodiment, the sulfide-based solid electrolyte may be present in an amount of 15 to 65 wt% based on the total weight of the composite anode layer.

In an embodiment, the weight ratio between the anode active material and the sulfide-based solid electrolyte may range from 5:95 to 99.99:0.01.

In an embodiment, the sulfide-based solid electrolyte may include an argyrodite-based solid electrolyte.

In an embodiment, the composite anode layer may further include a conductive material.

In an embodiment, the conductive material may include at least one of carbon black, acetylene black, Ketjen black, carbon fiber, carbon nanotube (CNT), carbon nanofiber, or vapor-grown carbon fiber (VGCF).

In an embodiment, the conductive material may be present in an amount of 0.01 to 40 wt% based on the total weight of the composite anode layer.

In some embodiments of the disclosed technology, a method for producing a composite anode layer includes: producing a core-shell structured anode active material including a core that includes silicon and a shell disposed on a surface of the core; and producing an anode layer including the anode active material and a sulfide-based solid electrolyte, wherein the shell includes a lithium-containing compound, and the lithium-containing compound includes at least one of phosphorus (P) and boron (B).

In an embodiment, the operation of manufacturing the anode active material may include a heat treatment process for a mixture of the core containing the silicon, the lithium raw material, and the precursor raw material.

In an embodiment, the heat treatment process may be performed at a temperature of 150°C or more.

In addition, the disclosed technology can be implemented in another embodiment to provide an anode including a composite anode layer implemented as discussed above.

In addition, the disclosed technology can be implemented in another embodiment to provide an all-solid-state battery including the anode, the cathode, and a solid electrolyte disposed therebetween.

In an embodiment, the solid electrolyte may include a sulfide-based solid electrolyte.

### BRIEF DESCRIPTION OF DRAWINGS

Certain aspects, features, and advantages of the disclosed technology are illustrated in the following detailed description with reference to the accompanying drawings.
FIG. 1 is a conceptual cross-sectional view illustrating the structure of an anode active material based on an embodiment.
FIG. 2 is a conceptual cross-sectional view illustrating the structure of a composite anode layer based on an embodiment.
FIGS. 3A and 3B are graphs showing rate performance evaluation results at discharge rates of 0.33C and 0.5C for pressurized cells including composite anode layers based on examples and comparative examples, respectively.
FIG. 4 is a graph showing the results of evaluating discharge capacity retention rates based on the number of cycles for pressurized cells including composite anode layers based on examples and comparative examples.

### DETAILED DESCRIPTION

Features of the disclosed technology are described through example embodiments with reference to the accompanying drawings.

Hereinafter, the technology disclosed in this specification and its implementation examples will be described in detail with reference to the attached drawings. However, these embodiments may be modified in various ways, and the scope thereof is not limited to the specific implementation examples described below. In addition, the disclosed technology may be implemented not only in the configurations described in the implementation examples described below, but also through selective combinations of all or part of the respective implementation examples, thereby allowing various modifications.

The disclosed technology is directed to designs and structures of an anode of an electrochemical device such as a battery, including specifically a all-solid state battery that includes the anode, a cathode separate from the anode, and a solid electrolyte disposed therebetween. When silicon-based anode materials are used to construct all-solid state batteries utilizing sulfide-based solid electrolytes, they may reduce battery performance due to chemical instability (e.g., decomposition of solid electrolyte caused by reduction reactions) resulting from the potential difference between silicon-based anode materials and sulfide-based solid electrolytes. In addition, because silicon-based anode materials undergo a volume expansion of 300% or more during charge/discharge cycles, they may become exposed within the anode composite layer, thereby aggravating the above-mentioned issues.

Therefore, there is a need to develop an anode material suitable for all-solid state batteries utilizing a sulfide-based solid electrolyte, which can improve the structural stability and lithium ion conductivity of the active material, thereby enhancing the rate performance and cycle performance of the battery.

To address the above-discussed issues, the disclosed technology can be implemented in some embodiments to provide an anode suitable for an all-solid state battery employing a sulfide-based solid electrolyte as an anode.

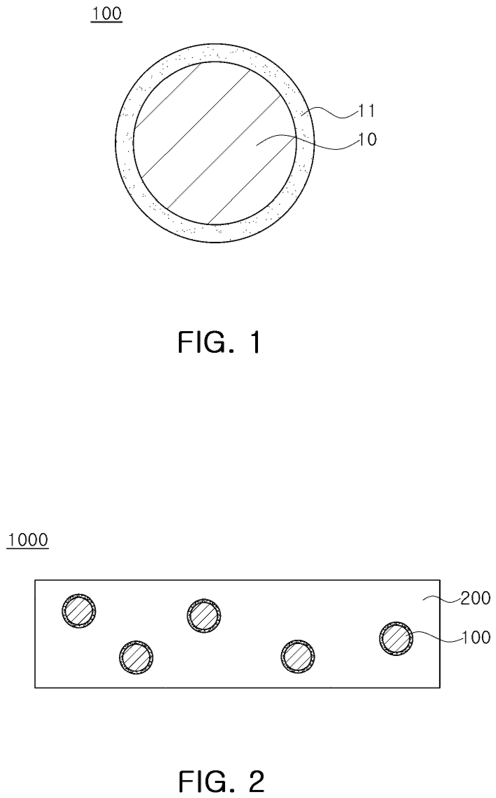

A composite anode layer (1000) based on one implementation example of the disclosed technology includes: an anode active material in which an ion conductive layer is coated on the surface of a silicon-based anode material; and a sulfide-based solid electrolyte. In an implementation, the silicon-based anode material may have a core-shell structure. This configuration suppresses side reactions at the interface between the sulfide-based solid electrolyte and the anode, thereby improving their chemical stability. Hereinafter, implementation examples of the technology disclosed in the disclosed technology will be described with reference to FIGS. 1 to 4.

FIG. 1 is a conceptual cross-sectional view illustrating the structure of an anode active material based on an implementation example.

FIG. 2 is a conceptual cross-sectional view illustrating the structure of a composite anode layer based on an implementation example.

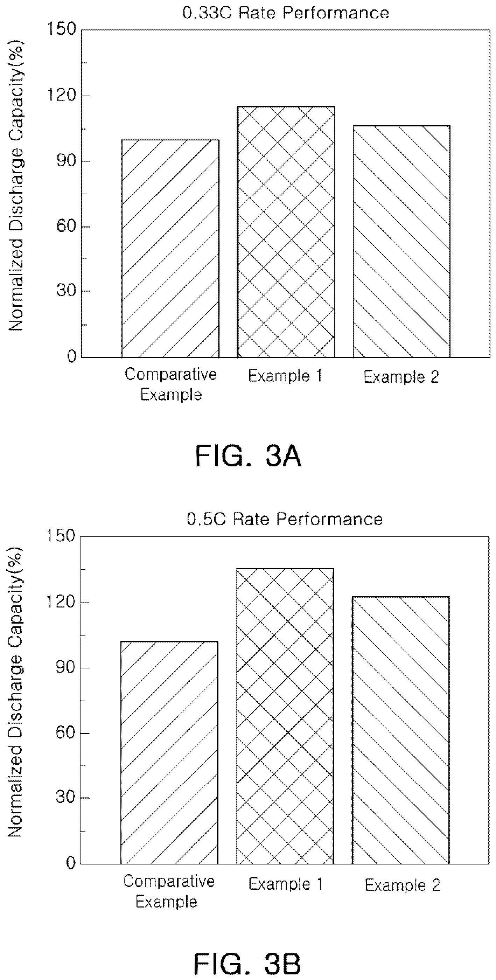

FIGS. 3A and 3B are graphs showing rate performance evaluation results at discharge rates of 0.33C and 0.5C for pressurized cells including composite anode layers based on examples and comparative examples, respectively.

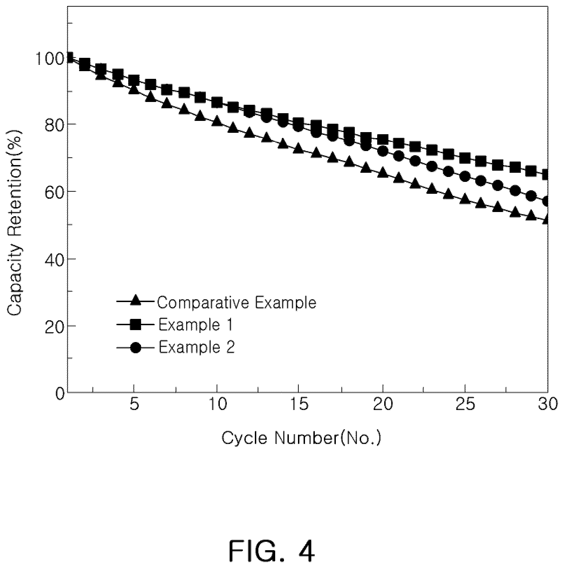

FIG. 4 is a graph showing the results of evaluating the discharge capacity retention rate based on the number of cycles for pressurized cells including composite anode layers based on examples and comparative examples.

### Composite Anode Layer

A composite anode layer (1000) based on an embodiment of the disclosed technology includes an anode active material (100) and a sulfide-based solid electrolyte (200), wherein the anode active material (100) includes an anode active material with a core-shell structure, including a core (10) containing silicon and a shell (11) on the surface of the core, wherein the shell (11) includes a lithium-containing compound, and wherein the lithium-containing compound includes at least one of phosphorus and boron.

The core (10) may be a particle-shaped material that serves as a raw material for the anode active material containing silicon. The core (10) is not particularly limited as long as it contains silicon, and may function as an active material capable of being alloyed with lithium (Li). For example, the core (10) may include at least one of silicon (Si), silicon oxide (SiOx; 0<x<2), metal-doped silicon oxide (SiOx; 0<x<2), carbon-coated silicon oxide (SiOx; 0<x<2), silicon-carbon composite (Si-C), or silicon alloy.

In the metal-doped silicon oxide, the metal may include lithium and/or magnesium, and the metal-doped silicon oxide may include metal silicate in SiOx (0<x<2). The silicon alloy may include silicon as its main component, and the silicon content in the silicon alloy may be, for example, 50 mol% or more, 70 mol% or more, or 90 mol% or more, and may be less than 100 mol%.

The shell (11) is a protective layer coated on the surface of the core (10), which may improve the structural stability and ion conductivity of the active material, and includes a lithium-containing compound. The lithium-containing compound may be an oxide in the form of a salt. In an embodiment, the lithium-containing compound may be represented by the following Chemical formula 1.

[Chemical formula 1] LiₐX_{b}O_{c}Y_{d}

In Chemical Formula 1, 0<a≤5, 0<b≤9, 0<c<10, 0≤d≤10, X includes at least one of phosphorus (P) and boron (B), and Y includes at least one of N, Al, Ti, Zr, H, V, Si, SiC, or C.

For example, the lithium-containing compound may include at least one of Li₃PO₄, Li₃BO₃, LiPON, or LiBON. The LiPON may be a compound in which some of the oxygen (O) atoms of Li3PO4 is substituted with nitrogen (N). The LiBON may be a compound in which some of the oxygen (O) atoms of Li₃BO₃ is substituted with boron (B).

In some embodiments, the lithium-containing compound may include at least one of Li₃PO₄ or LiPON. When the lithium-containing compound includes both lithium and phosphorus, it can provide excellent structural stability and ion conductivity to the anode active material through the formation of a core-shell structure, thereby improving the rate performance and life performance of the all-solid state battery.

The thickness of the shell (11) is not particularly limited. For example, the thickness of the shell (11) may be 0.01 to 100 nm, or 0.01 to 50 nm.

The composite anode layer (1000) may further include an additional anode active material in addition to the anode active material of the core-shell structure described above. The type of the additional anode active material is not particularly limited. For example, examples of the additional anode active material may include carbon-based materials, such as crystalline carbon, amorphous carbon, carbon composites, and carbon fibers; lithium metal; lithium alloy; silicon-containing materials, and tin-containing materials. The above crystalline carbon may be, for example, graphite-based carbon such as natural graphite, artificial graphite, graphitized coke, mesocarbon microbead (MCMB), or mesophase pitch-based carbon fiber (MPCF).

The above amorphous carbon may be, for example, hard carbon, soft carbon, coke, mesocarbon microbead (MCMB), or mesophase pitch-based carbon fiber (MPCF).

The elements included in the lithium alloy may be, for example, aluminum, zinc, bismuth, cadmium, antimony, silicon, lead, tin, gallium, or indium.

The silicon-containing material is not particularly limited as long as it contains silicon, and may be an active material capable of alloying with lithium (Li). For example, the core (10) may include at least one of silicon (Si), silicon oxide (SiOx; 0<x<2), metal-doped silicon oxide (SiOx; 0<x<2), carbon-coated silicon oxide (SiOx; 0<x<2), silicon-carbon composite (Si-C), or silicon alloy.

If the composite anode layer (1000) above includes an additional anode active material in addition to the core-shell structured anode active material, the content of the core-shell structured anode active material based on the total weight of the anode active material may be, for example, 50 wt% or more, 70 wt% or more, or 90 wt% or more, and for example, less than 100 wt%.

In some implementation examples, the anode active material (100) may be present in an amount of 20 to 80 wt% based on the total weight of the composite anode layer, and more specifically, may be present in an amount of 30 wt% or more, 40 wt% or more, or 70 wt% or less, or 60 wt% or less.

In some embodiments, the sulfide-based solid electrolyte (200) may be present in an amount of 15 to 65 wt% based on the total weight of the composite anode layer, and more specifically, may be present in an amount of 25 wt% or more, 35 wt% or more, 45 wt% or more, or 55 wt% or less, or 50 wt% or less.

In some embodiments, the weight ratio of the anode active material (100) and the sulfide-based solid electrolyte (200) may be 5:95 to 99.99:0.01. Specifically, the weight ratio of the anode active material (100) and the sulfide-based solid electrolyte (200) may be 40:60 to 60:40.

In some embodiments, the sulfide-based solid electrolyte may include an argyrodite-based solid electrolyte. The above azirodite-based solid electrolyte may be a compound represented by the chemical formula of Liₐ⁺A⁺_{b}Q_{c}X⁻_{d}. In the chemical formula above, 1≤a≤12, 0≤b≤5, 0≤c≤10, 0≤d≤2, A is at least one of P, As, Ge, Ga, Sb, Si, Sn, Al, In, Ti, V, Nb, or Ta, Q is at least one of S, Se, or Te, and X is at least one of Cl, Br, I, F, CN, OCN, SCN, or N3.

Specifically, the argyrodite-based solid electrolyte may be a compound represented by a chemical formula such as Li₇₋ₓPS₆₋ₓClₓ (0≤x≤2), Li₇₋ₓPS₆₋ₓBrₓ (0≤x≤2), Li₇₋ₓPS₆₋ₓIₓ (0≤x≤2), Li₆PS₅Cl, Li₆PS₅Br, , Li₆PS₅I, Li_{6.5}Sb_{0.5}Ge_{0.5}S₅I, Li_{5.7}PS_{4.7}Cl_{1.3}, Li_{6.6}Sb_{0.5}Si_{0.6}S₅I.

In some embodiments, the composite anode layer (1000) may further include a conductive material. The type of the conductive material is not particularly limited. For example, the conductive material may include at least one of a particulate carbon material or a fibrous carbon material. The particulate carbon material may be carbon black such as Super-P or Super-C, acetylene black, Ketjen black, etc., and the fibrous carbon material may be carbon fiber, carbon nanotube (CNT), carbon nanofiber, vapor-grown carbon fiber (VGCF), etc.

In some embodiments, the conductive material may be present in an amount of 0.01 to 40 wt% based on the total weight of the composite anode layer (1000). Specifically, the conductive material may be present in an amount of 0.01 to 10 wt%, more specifically 0.1 to 5 wt%, based on the total weight of the composite anode layer (1000).

The composite anode layer (1000) may be manufactured by a manufacturing method based on any one of the embodiments described below.

### Method for Manufacturing Composite Anode Layer

A method for manufacturing a composite anode layer (1000) based on an embodiment includes an operation of manufacturing an anode active material (100) having a core-shell structure, including a core (10) containing silicon and a shell (11) on the surface of the core; and an operation of manufacturing an anode layer including the anode active material (100) and a sulfide-based solid electrolyte (200). The shell includes a lithium-containing compound, and the lithium-containing compound includes at least one of phosphorus and boron.

### <Manufacturing of Anode Active Material>

The operation of manufacturing the anode active material (100) may be an operation of forming a shell (11), which is a protective layer capable of improving structural stability and ion conductivity of the active material, on the surface of the core (10) containing silicon. In some embodiments, the operation of manufacturing the anode active material (100) may include a heat treatment process for a mixture of the core (10) containing silicon, a lithium raw material, and a precursor raw material.

The operation of manufacturing the above anode active material (100) may be performed using a wet process. For example, the mixture may be manufactured by mixing a core (10) containing silicon, a lithium raw material, and a precursor raw material in a solvent, followed by drying. A detailed description of the core (10) is omitted here because it has already been provided above.

The lithium raw material is not particularly limited as long as it is a compound containing lithium, and may be lithium hydroxide (LiOH) as an example. In an embodiment, the precursor raw material may be a phosphorus-containing compound. The phosphorus-containing compound is not particularly limited, and may be phosphoric acid (H₃PO₄) as an example. The coating concentration of the phosphorus-containing compound may be 0.01 mol% to 10 mol% based on phosphorus.

In another embodiment, the precursor raw material may be a boron-containing compound. The boron-containing compound is not particularly limited, and may be boric acid (H₃BO₃) as an example. The coating concentration of the above boron-containing compound may be 0.01 ppm to 5000 ppm based on boron.

The solvent is not particularly limited, and may be, for example, an organic solvent such as ethanol or deionized water (D.W.).

The operation of preparing the mixture may include a process of mixing the core, lithium raw material, and phosphorus raw material added to the solvent by stirring. The stirring speed during the stirring process may be, for example, 200 RPM to 1000 RPM. In addition, the drying temperature during the drying process may be 70°C to 300°C. When the stirring speed and the drying temperature are within the above-described range, the material for forming the shell may be uniformly distributed on the core surface, thereby improving the uniformity of the anode active material of the core-shell structure.

The heat treatment process may be a process of calcining the mixture prepared as described above. In some embodiments, the heat treatment process may be performed at a temperature of 150°C or more. For example, the heat treatment process may be performed at 170°C or more, and the heat treatment process may be performed at 800°C or less.

In some implementations, the heat treatment process may be performed for 2 hours or more. For example, the heat treatment process may be performed for 4 hours or more, and the heat treatment process may be performed for 10 hours or less. When the heat treatment process is performed within the above-described temperature and time range, the core-shell structure of the anode active material is effectively formed, thereby improving the structural stability, ion conductivity, and overall performance of the active material.

The operation of manufacturing the anode active material (100) may further include an operation of screening the mixture after the heat treatment process. For example, the operation of screening the mixture may be performed by sieving using a sieve. The screening particle size of the sieve may be, for example, 80 µm or less. When the operation of manufacturing the above anode active material (100) further includes an operation of selecting the mixture after the heat treatment process, the uniformity of the anode active material may be improved by removing some of the active material clumped together in the heat treatment process.

### <Manufacturing of Anode Layer>

The operation of manufacturing the anode layer is an operation of manufacturing a composite anode layer (1000) by mixing the anode active material (100) and the sulfide-based solid electrolyte (200) manufactured as described above. Detailed descriptions of the addition amounts of the anode active material (100) and the sulfide-based solid electrolyte (200) overlap with the above-described contents, so descriptions are omitted.

The mixing method of the anode active material (100) and the sulfide-based solid electrolyte (200) is not particularly limited. For example, the mixing of the anode active material (100) and the sulfide-based solid electrolyte (200) may be performed by a dry mixing method or a wet mixing method.

For example, the dry mixing method may be applied alone or in combination with a dry mixer such as a mortar and pestle, a vortex mixer, etc.

The above wet mixing method may be applied, for example, by dissolving together an aqueous solvent such as water or an organic solvent such as ethanol, N-methyl-2-pyrrolidone (NMP), isobutyl isobutyrate (IBIB), and an anode slurry binder component characterized by being one or more selected from the group consisting of styrenebutadiene rubber (SBR), acrylonitrile-butadiene rubber, acrylonitrile-butadiene-styrene rubber, and an acrylic copolymer.

If the composite anode layer (1000) further includes a conductive material, the operation of manufacturing the anode layer may be performed by mixing the anode active material (100), the sulfide-based solid electrolyte (200), and the conductive material manufactured as described above. A detailed description of the mixing method and a detailed description of the amount of conductive material added are redundant with the above-described content, so description is omitted.

### Anode and all-solid-state battery

An anode based on an embodiment includes a composite anode layer (1000) based on any one of the above-described embodiments. For example, the anode may further include an anode current collector, or may have a structure formed of a composite anode layer (1000) without including an anode current collector.

If the anode further includes an anode current collector, the anode may have a structure including a composite anode layer (1000) arranged on at least one surface of the anode current collector.

The components of the anode current collector are not particularly limited. For example, the anode current collector may be a plate or foil made of one or more of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In addition, the thickness of the anode current collector is not particularly limited. For example, the thickness of the anode current collector may be 0.1 to 60 µm.

An all-solid state battery based on an embodiment includes an anode as described in any of the above-described embodiments. For example, the all-solid state battery may include an anode implemented based on any of the above-described embodiments, a cathode, and a solid electrolyte disposed therebetween.

The cathode may include a cathode current collector; and a cathode composite layer on at least one surface of the cathode current collector. The components of the cathode current collector are not particularly limited. For example, the cathode current collector may be a plate or foil that includes at least one of indium (In), copper (Cu), magnesium (Mg), stainless steel, titanium (Ti), iron (Fe), cobalt (Co), nickel (Ni), zinc (Zn), aluminum (Al), germanium (Ge), or lithium (Li), or alloys thereof. In addition, the thickness of the cathode current collector is not particularly limited. For example, the thickness of the cathode current collector may be 0.1 to 60 µm.

The cathode composite layer may include a cathode active material that participates in the electrochemical reaction of the secondary battery. The cathode active material is not particularly limited, and may include a compound capable of reversibly intercalating and deintercalating lithium ions.

For example, the cathode active material may include a lithium-nickel metal oxide. The above lithium-nickel metal oxide may further include at least one of cobalt (Co), manganese (Mn), or aluminum (Al).

In some embodiments, the cathode active material or the lithium-nickel metal oxide may include a layered structure or a crystal structure represented by the following Chemical formula 2.

[Chemical formula 2] LiₓNiₐM_{b}O_{2+z}

In the Chemical formula 2, 0.9≤x≤1.2, 0.6≤a≤0.99, 0.01≤b≤0.4, - 0.5≤z≤0.1 may be satisfied. As described above, M may include Co, Mn, and/or Al.

The chemical structure represented by the Chemical formula 2 represents a bonding relationship included in the layered structure or crystal structure of the cathode active material and does not exclude other additional elements. For example, M includes Co and/or Mn, and Co and/or Mn may serve as a main active element of the cathode active material together with Ni. The above Chemical formula 2 is provided to express the bonding relationship of the main active element and should be understood as encompassing the introduction and substitution of additional elements.

In some implementations, auxiliary elements may be further included in addition to the main active element to enhance the chemical stability of the cathode active material or the layered structure/crystal structure. The auxiliary elements may be incorporated together in the layered structure/crystal structure to form bonds, and in this case, it should be understood that they are also included within the chemical structure range represented by Chemical formula 2.

The auxiliary elements may include at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr, for example. The auxiliary elements may also act as auxiliary active elements that contribute to the capacity/output activity of the cathode active material, such as Al, together with Co or Mn.

For example, the cathode active material or the lithium-nickel metal oxide may include a layered structure or a crystal structure represented by the following Chemical formula 2-1.

[Chemical formula 2-1] LiₓNiₐM1_{b1}M2_{b2}O_{2+z}

In the Chemical formula 2-1, M1 may include Co, Mn, and/or Al. M2 may include the auxiliary element described above. In the Chemical formula 2-1, 0.9≤x≤1.2, 0.6≤a≤0.99, 0.01≤b1+b2≤0.4, -0.5≤z≤0.1 may be satisfied.

The cathode active material may further include a coating element or a doping element. For example, elements substantially identical to or similar to the auxiliary elements described above may be used as the coating element or the doping element. For example, the elements described above may be used alone or in combination of two or more as the coating element or the doping element.

The coating element or doping element may be present on the surface of the lithium-nickel metal oxide particle, or may penetrate through the surface of the lithium-nickel metal composite oxide particle and be included in the bonding structure represented by the Chemical formula 2 or Chemical formula 2-1.

The cathode active material may include a nickel-cobalt-manganese (NCM)-based lithium oxide. In this case, an NCM-based lithium oxide having an increased nickel content may be used.

The content of Ni in the NCM-based lithium oxide (for example, the mole fraction of nickel among the total moles of nickel, cobalt, and manganese) may be 0.6 or more, 0.7 or more, or 0.8 or more. In some embodiments, the Ni content may be from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO4).

In some implementations, the cathode active material may include a Mn-rich active material, a LLO (Li rich layered oxide)/OLO (Over Lithiated Oxide) active material, or a Co-less active material having a chemical structure or crystal structure represented by Chemical formula 3.

[Chemical formula 3] p [Li₂MnO₃] · (1-p) [Li_{q}JO₂]

In Chemical formula 3, 0 < p < 1, 0.9 ≤ q ≤ 1.2, and J may include at least one element among Mn, Ni, Co, Fe, Cr, V, Cu, Zn, Ti, Al, Mg, and B.

The cathode composite layer may further include a binder. The binder is not particularly limited. For example, the binder may include one or more of polyvinylidene fluoride, styrene butadiene rubber (SBR), polytetrafluoroethylene, polyvinylidene fluoride, vinylidene fluoride/hexafluoropropylene copolymer, polyacrylonitrile, and polymethyl methacrylate.

The above cathode composite layer may further include a conductive material. The conductive material is not particularly limited. For example, the conductive material may include one or more of graphite such as natural graphite or artificial graphite; carbon-based materials such as carbon black, acetylene black, Ketjen black, channel black, furnace black, lamp black, summer black, carbon fiber, and carbon nanotubes (CNT); metal powder or metal fiber such as copper, nickel, aluminum, and silver; conductive whiskers such as zinc oxide and potassium titanate; conductive metal oxides such as titanium oxide; or conductive polymers such as polyphenylene derivatives.

In some implementations, the solid electrolyte may include a sulfide-based solid electrolyte. For example, the above sulfide-based solid electrolyte may be at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m, n are positive numbers, Z is one of Ge, Zn, or Ga), Li₂S-GeS₂, Li₂S-SiS₂-Li₃PO₄, Li₂S-SiS₂-LiₚMO_{q} (p, q are positive numbers, M is one of P, Si, Ge, B, Al, Ga In. 1), Li₇₋ₓPS₆-ₓClₓ (0≤x≤2), Li₇₋ₓPS₆₋ₓBrₓ (0≤x≤2), and Li₇₋ₓPS₆₋ₓIₓ (0≤x≤2) .

The sulfide-based solid electrolyte may include an argyrodite-based solid electrolyte. The argyrodite-based solid electrolyte may be a compound represented by the following Chemical formula 4.

[Chemical formula 4] Liₐ⁺A⁺_{b}Q_{c}X⁻_{d}

In the chemical formula 4, 15≤a≤12, 0≤b≤5, 0≤c≤10, 0≤d≤2, A is at least one of P, As, Ge, Ga, Sb, Si, Sn, Al, In, Ti, V, Nb, or Ta, Q is at least one of S, Se, or Te, and X is at least one of Cl, Br, I, F, CN, OCN, SCN, or N3.

Specifically, the argyrodite-based solid electrolyte may be a compound represented by a chemical formula such as Li₇₋ₓPS₆₋ₓClₓ (0≤x≤2), Li₇₋ₓPS₆₋ₓBrₓ (0≤x≤2) , Li₇₋ₓPS₆₋ₓIₓ (0≤x≤2), Li₆PS₅Cl, Li₆PS₅Br, , Li₆PS₅I, Li_{6.5}Sb_{0.5}Ge_{0.5}S₅I, Li_{5.7}PS_{4.7}Cl_{1.3}, Li_{6.6}Sb_{0.5}Si_{0.6}S₅I.

The solid electrolyte may include a type that is the same as or different from the sulfide-based solid electrolyte included in the composite anode layer described above. Specifically, the solid electrolyte and the sulfide-based solid electrolyte included in the composite anode layer described above may each include an argyrodite-based solid electrolyte.

### Example

### 1. Manufacturing of anode active material

### 1) Example

### ≤ Example (1) > - Li-P coating

A silicon-based alloy as a core, lithium hydroxide (LiOH) as a lithium raw material, and phosphoric acid (H₃PO₄) as a phosphorus-containing compound as a precursor raw material were added to deionized water (D.W.) as a solvent, stirred, and filtered through a 0.1 µm or more filter to separate only the silicon-based alloy on which the coating material was wet-coated from the solvent. After that, a heat treatment process was performed in a sintering furnace at 200°C for 4 hours or more to manufacture an anode active material having a core-shell structure in which a shell containing lithium and phosphorus was coated on the core surface.

### < Example (2) > - Li-B Coating

A silicon-based alloy as a core, lithium hydroxide (LiOH) as a lithium raw material, and boric acid (H3BO3) as a boron-containing compound as a precursor raw material were added to deionized water (D.W.) and stirred, and then filtered through a 0.1 µm or more filter to separate only the silicon-based alloy on which the coating material was wet-coated from the solvent. After that, a heat treatment process was performed in a sintering furnace at 200°C for 4 hours or more to manufacture an anode active material having a core-shell structure in which a shell containing lithium and boron was coated on the core surface.

### 2) Comparative Example

The silicon-based alloy above, to which a separate coating process was not applied, was prepared as the anode active material of the comparative example.

### 2. Manufacturing of composite anode layer

The anode active material, argyrodite-based sulfide-based solid electrolyte, and conductive material (carbon black) based on the examples and comparative examples were mixed in a barracks bowl for 10 minutes or more to manufacture a composite anode layer in powder form. At this time, the contents of the anode active material, sulfide-based solid electrolyte, and conductive material were 50 wt%, 45 wt%, and 5 wt%, respectively, based on the total weight of the composite anode layer.

### 3. Manufacturing of pressurized cell

The composite anode powder and argyrodite-based sulfide-based solid electrolyte manufactured as described above were put into a pressurized cell mold having a diameter of 1 cm, and then pressurized at a pressure of 20 MPa or more. Thereafter, a lithium (Li) counter electrode and an indium (In) counter electrode were put into the mold on the opposite side to the mold on the side where the composite anode powder was put.

The pressurized cell mold was placed on the Lower Body, the Upper Body was closed, and the first compression was performed through the (Wing) Screw, and the torque wrench was tightened to 50 kN or more. In addition, in order to prevent the generation of hydrogen sulfide and the decrease in conductivity due to the contact between moisture in the air and the sulfide-based solid electrolyte, the space between the pressurized cells was blocked through an O-ring, and the space between the Cap and the Body was sealed with Parafilm.

### 4. Performance Evaluation

### 1) Rate Performance

After the activation (Formation) cycle in which the pressurized cell manufactured as described above was charged/discharged at a rate of 0.1C at 30°C, the rate performance was measured. In the case of the rate, the rate was increased stepwise in three or more different rates (0.2C, 0.33C, 0.5C) and the capacity value was measured three times at each rate, and the rate capacity was calculated as the average value of the three capacity values measured at the corresponding rate.

The value calculated as the ratio of the discharge capacity of the Example to the discharge capacity of the Comparative Example measured according to the above was used as the Normalized Specific Capacity (%) value. The Normalized Discharge Capacity value at each rate was calculated as the capacity improvement rate (%) of the Example compared to the Comparative Example (100%) based on the corresponding rate (0.33C, 0.5C) and is illustrated in FIG. 3A and FIG. 3B. The detailed figures of the capacity improvement rate are illustrated in Table 1 below.

### 2) Life Performance (Capacity Retention Rate)

After the pressurized cell manufactured as described above was charged/discharged at a current rate of 0.1C at 30°C, the rate performance was evaluated stepwise under the above conditions, and then the rate was changed to 0.33C in the 13th cycle and 100 cycles or more were performed at the rate of 0.33C to measure the cycle capacity. The results are illustrated in FIG. 4. The capacity retention rate value means the ratio of the discharge capacity at the current cycle number (No.) to the discharge capacity at the 14th cycle, which is the cycle immediately following the change to the rate of 0.33C, and shows a decreasing tendency starting from 100%. In addition, the cycle number (No.) when the capacity retention rate becomes 50% is illustrated in Table 1 below.

**[Table 1]**

| | Comparative Example | Example (1) | Example (2) |
|---|---|---|---|
| 0.33C | 100 % | 115.1 % | 106.4 % |
| 0.5C | 100 % | 134.1 % | 121.2 % |
| Number of cycles (No.) at 50% capacity retention | 31 | 47 | 34 |

Referring to FIGS. 3A to 4 and Table 1, compared to the pressurized cell of the comparative example in which the anode active material was applied without forming a separate shell-structured coating layer on the surface of the silicon-containing core, the pressurized cell of the exemplary embodiment maintained a relatively high discharge capacity value at a high rate, showing excellent rate performance. In addition, compared to the pressurized cell of the comparative example, the pressurized cell of the exemplary embodiment also showed a relatively high capacity retention rate, showing excellent life performance.

Considering this, it is judged that the composite anode layer manufactured by mixing the anode active material having a shell-structured coating layer containing a compound containing lithium and phosphorus on the surface of the silicon-containing core with a sulfide-based solid electrolyte may effectively improve the high-capacity characteristics, rate performance, and life performance of an all-solid state battery including it.

As set forth above, in an embodiment, the structural stability of an anode active material using a silicon-based anode material may be improved.

In another embodiment, lithium ion conductivity of an anode active material based on a silicon-based anode material may be improved.

In another embodiment, an anode suitable for an all-solid state battery based on a sulfide-based solid electrolyte may be provided.

In another embodiment, electrochemical performance of an all-solid state battery based on a sulfide-based solid electrolyte may be improved.

Only specific examples of implementations of certain embodiments are described. Variations, improvements and enhancements of the disclosed embodiments and other embodiments may be made based on the disclosure of this patent document.

The present disclosure relates also to the following numbered aspects:
Aspect 1) A composite anode layer comprising: an anode active material and a sulfide-based solid electrolyte, wherein the anode active material includes a core-shell structured anode active material including a core that includes silicon and a shell disposed on a surface of the core, wherein the shell includes a lithium-containing compound, and wherein the lithium-containing compound includes at least one of phosphorus (P) or boron (B).
Aspect 2) The composite anode layer of aspect 1, wherein the lithium-containing compound is represented by Chemical formula 1, LiaXbOcYd, where 0<a≤5, 0<b≤9, 0<c<10, 0≤d≤10, X includes at least one of phosphorus (P) or boron (B), and Y includes at least one of nitrogen (N), aluminum (Al), titanium (Ti), zirconium (Zr), hydrogen (H), vanadium (V), silicon (Si), silicon carbide (SiC), or carbon (C).
Aspect 3) The composite anode layer of aspect 1 or 2, wherein the lithium-containing compound includes at least one of Li₃PO₄, Li₃BO₃, LiPON, or LiBON.
Aspect 4) The composite anode layer of any one of aspects 1 to 3, wherein the lithium-containing compound includes at least one of Li₃PO₄ or LiPON.
Aspect 5) The composite anode layer of any one of aspects 1 to 4, having one or more of the following characteristics (i) to (iii), respectively alone ore in combination:
   (i) the anode active material is present in an amount of 20 to 80 wt% based on the total weight of the composite anode layer,
   (ii) the sulfide-based solid electrolyte is present in an amount of 15 to 65 wt% based on the total weight of the composite anode layer, and/or
   (iii) the weight ratio between the anode active material and the sulfide-based solid electrolyte ranges from 5:95 to 99.99:0.01.
Aspect 6) The composite anode layer of any one of aspects 1 to 5, wherein the sulfide-based solid electrolyte includes an argyrodite-based solid electrolyte.
Aspect 7) The composite anode layer of any one of aspects 1 to 6, further comprising a conductive material.
Aspect 8) The composite anode layer of aspect 7, wherein the conductive material includes at least one of carbon black, acetylene black, Ketjen black, carbon fiber, carbon nanotube (CNT), carbon nanofiber, or vapor-grown carbon fiber (VGCF).
Aspect 9) The composite anode layer of aspect 7 or 8, wherein the conductive material is present in an amount of 0.01 to 40 wt% based on the total weight of the composite anode layer.
Aspect 10) A method for manufacturing a composite anode layer comprising:
   manufacturing a core-shell structured anode active material including a core that includes silicon and a shell disposed on a surface of the core, and manufacturing an anode layer including the anode active material and a sulfide-based solid electrolyte, wherein the shell includes a lithium-containing compound, and wherein the lithium-containing compound includes at least one of phosphorus (P) and boron (B).
Aspect 11) The method of aspect 10, wherein the manufacturing the anode active material includes a heat treatment process for a mixture of the core containing the silicon, the lithium raw material, and the precursor raw material.
Aspect 12) The method of aspect 11, wherein the heat treatment process is performed at a temperature of 150°C or more.
Aspect 13) An anode comprising a composite anode layer according to any one of aspects 1 to 9.
Aspect 14) An all-solid state battery comprising the anode of aspect 13, a cathode and a solid electrolyte disposed therebetween.
Aspect 15) The all-solid state battery of aspect 14, wherein the solid electrolyte includes a sulfide-based solid electrolyte.

## Claims

1. A composite anode layer comprising:
an anode active material and a sulfide-based solid electrolyte,
wherein the anode active material includes a core-shell structured anode active material including a core that includes silicon and a shell disposed on a surface of the core,
wherein the shell includes a lithium-containing compound, and
wherein the lithium-containing compound includes at least one of phosphorus (P) or boron (B).

2. The composite anode layer of claim 1, wherein the lithium-containing compound is represented by Chemical formula 1, LiₐX_{b}O_{c}Y_{d}, where 0<a≤5, 0<b≤9, 0<c<10, 0≤d≤10, X includes at least one of phosphorus (P) or boron (B), and Y includes at least one of nitrogen (N), aluminum (Al), titanium (Ti), zirconium (Zr), hydrogen (H), vanadium (V), silicon (Si), silicon carbide (SiC), or carbon (C).

3. The composite anode layer of claim 1 or 2, wherein the lithium-containing compound includes at least one of Li₃PO₄, Li₃BO₃, LiPON, or LiBON.

4. The composite anode layer of any one of claims 1 to 3, wherein the lithium-containing compound includes at least one of Li₃PO₄ or LiPON.

5. The composite anode layer of any one of claims 1 to 4, having one or more of the following characteristics (i) to (iii), respectively alone or in combination:
(i) the anode active material is present in an amount of 20 to 80 wt% based on the total weight of the composite anode layer,
(ii) the sulfide-based solid electrolyte is present in an amount of 15 to 65 wt% based on the total weight of the composite anode layer, and/or
(iii) the weight ratio between the anode active material and the sulfide-based solid electrolyte ranges from 5:95 to 99.99:0.01.

6. The composite anode layer of any one of claims 1 to 5, wherein the sulfide-based solid electrolyte includes an argyrodite-based solid electrolyte.

7. The composite anode layer of any one of claims 1 to 6, further comprising a conductive material.

8. The composite anode layer of claim 7, wherein the conductive material includes at least one of carbon black, acetylene black, Ketjen black, carbon fiber, carbon nanotube (CNT), carbon nanofiber, or vapor-grown carbon fiber (VGCF).

9. The composite anode layer of claim 7 or 8, wherein the conductive material is present in an amount of 0.01 to 40 wt% based on the total weight of the composite anode layer.

10. A method for manufacturing a composite anode layer comprising:
manufacturing a core-shell structured anode active material including a core that includes silicon and a shell disposed on a surface of the core,and
manufacturing an anode layer including the anode active material and a sulfide-based solid electrolyte,
wherein the shell includes a lithium-containing compound, and
wherein the lithium-containing compound includes at least one of phosphorus (P) and boron (B).

11. The method of claim 10, wherein the manufacturing the anode active material includes a heat treatment process for a mixture of the core containing the silicon, the lithium raw material, and the precursor raw material.

12. The method of claim 11, wherein the heat treatment process is performed at a temperature of 150°C or more.

13. An anode comprising a composite anode layer according to any one of claims 1 to 9.

14. An all-solid state battery comprising the anode of claim 13, a cathode and a solid electrolyte disposed therebetween.

15. The all-solid state battery of claim 14, wherein the solid electrolyte includes a sulfide-based solid electrolyte.
